# EUROPEAN PATENT APPLICATION

(11) **EP 4 815 281 A1**
(43) Date of publication of application: **30.09.2026**
(21) Application number: 26167122.6
(22) Date of filing: 24.03.2026
(51) Int. Cl.: H02M 1/00, H02M 1/12, H02M 3/00, H02M 3/335

(54) **RESONANT CONVERTER**

(30) Priority: 24.03.2025 US 202563776469 P
(71) Applicant: DELTA ELECTRONICS, INC., 11491 Taipei (TW)
(72) Inventor: Wang, Dakai, Morrisville, NC 27560 (US); Chang, Chao-Fong, 320023 Taoyuan City (TW); Kumar, Misha, Morrisville, NC 27560 (US); Barbosa, Peter Mantovanelli, 320023 Taoyuan City (TW)
(74) Representative: Uexküll & Stolberg

(57) **Abstract**

A resonant converter (1, 1a) is provided. The resonant converter (1, 1a) includes a primary circuit (2), a secondary circuit (4), and a controller (5). The controller (5) is configured to control a first primary switch (Sa1) and a first secondary switch (Sa2, Sa3) by a first control signal (Sa), control a second primary switch (Sa1') and a second secondary switch (Sa2', Sa3') by a second control signal (Sa'), control a third primary switch (Sbl) and a third secondary switch (Sb2, Sb3) by a third control signal (Sb), control a fourth primary switch (Sb1') and a fourth secondary switch (Sb2', Sb3') by a fourth control signal (Sb'), control a fifth primary switch (Sc1) and a fifth secondary switch (Sc2, Sc3) by a fifth control signal (Sc), and control a sixth primary switch (Sc1') and a sixth secondary switch (Sc2', Sc3') by a sixth control signal (Sc').

## Description

### FIELD OF THE INVENTION

The present disclosure relates to a converter, and more particularly to a resonant converter.

### BACKGROUND OF THE INVENTION

With the rapid development of information technology, especially in cloud computing, big data and artificial intelligence, the power consumption of data centers has significantly increased. The power level and power density of each power supply unit have increased significantly. Consequently, three-phase resonant converter has become one of the best candidates for data center applications because of reducing RMS and peak current, enhancing magnetic integrations and power density.

However, the secondary circuit of the three-phase resonant converter has disadvantage of the current waveform distortion, predicting the current waveform hardly under different switching frequencies and load conditions, and controlling the synchronous rectifier hardly with fast load transient.

To overcome the drawbacks of the conventional technologies, it is important to provide a resonant converter.

### SUMMARY OF THE INVENTION

The embodiment of the present disclosure provides a resonant converter. The first primary switch and the first secondary switch are controlled by a first control signal. The second primary switch and the second secondary switch are controlled by a second control signal. The third primary switch and the third secondary switch are controlled by a third control signal. The fourth primary switch and the fourth secondary switch are controlled by a fourth control signal. The fifth primary switch and the fifth secondary switch are controlled by a fifth control signal. The sixth primary switch and the sixth secondary switch are controlled by a sixth control signal. In one embodiment, the primary switch of the primary circuit and the corresponding secondary switch of the secondary circuit are controlled by the substantially same control signal. In one embodiment, the primary switch of the primary circuit and the corresponding secondary switch of the secondary circuit are controlled by the approximately same control signal(s) within a predetermined tolerance range. Consequently, the secondary circuit of the resonant converter has advantage of smoothing current waveform, predicting the current waveform easily under different switching frequencies and load conditions, and controlling the other elements easily with fast load transient.

In accordance with an aspect of the present disclosure, a resonant converter is provided. The resonant converter includes a primary circuit, a secondary circuit and a controller. The primary circuit includes a first bridge arm, a second bridge arm and a third bridge arm. The first bridge arm includes a first primary switch and a second primary switch. The second bridge arm includes a third primary switch and a fourth primary switch. The third bridge arm includes a fifth primary switch and a sixth primary switch. The secondary circuit includes a first sub circuit, a second sub circuit and a third sub circuit. The first sub circuit includes at least one first secondary switch and at least one second secondary switch. The second sub circuit includes at least one third secondary switch and at least one fourth secondary switch. The third sub circuit includes at least one fifth secondary switch and at least one sixth secondary switch. The controller is configured to control the first primary switch and the at least one first secondary switch by a first control signal, control the second primary switch and the at least one second secondary switch by a second control signal, control the third primary switch and the at least one third secondary switch by a third control signal, control the fourth primary switch and the at least one fourth secondary switch by a fourth control signal, control the fifth primary switch and the at least one fifth secondary switch by a fifth control signal, and control the sixth primary switch and the at least one sixth secondary switch by a sixth control signal.

The above contents of the present disclosure will become more readily apparent to those ordinarily skilled in the art after reviewing the following detailed description and accompanying drawings, in which:

### BRIEF DESCRIPTION OF THE DRAWINGS

FIG. 1 is a schematic circuit diagram illustrating the circuitry topology of a resonant converter according to a first embodiment of the present disclosure;
FIG. 2A is a schematic timing waveform diagram illustrating a first embodiment of control signals of the controller of the resonant converter of FIG. 1;
FIG. 2B is a schematic timing waveform diagram illustrating a second embodiment of control signals of the controller of the resonant converter of FIG. 1;
FIG. 3A is a schematic timing waveform diagram illustrating the parameter waveforms of the first control signal and the second control signal and the current of the resonant converter of FIG. 1 under the duty cycle at 17% and a light load condition;
FIG. 3B is a schematic timing waveform diagram illustrating the parameter waveforms of the first control signal and the second control signal and the current of the resonant converter of FIG. 1 under the duty cycle at 33% and a light load condition;
FIG. 3C is a schematic timing waveform diagram illustrating the parameter waveforms of the first control signal and the second control signal and the current of the resonant converter of FIG. 1 under the duty cycle at 17% and a heavy load condition;
FIG. 3D is a schematic timing waveform diagram illustrating the parameter waveforms of the first control signal and the second control signal and the current of the resonant converter of FIG. 1 under the duty cycle at 33% and a heavy load condition;
FIG. 4 shows relationship between the duty cycle and the switching frequency of the resonant converter of FIG. 1;
FIG. 5 shows relationship of the output voltage, the duty cycle and the switching frequency of the resonant converter of FIG. 1; and
FIG. 6 is a schematic circuit diagram illustrating the circuitry topology of a resonant converter according to a second embodiment of the present disclosure.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

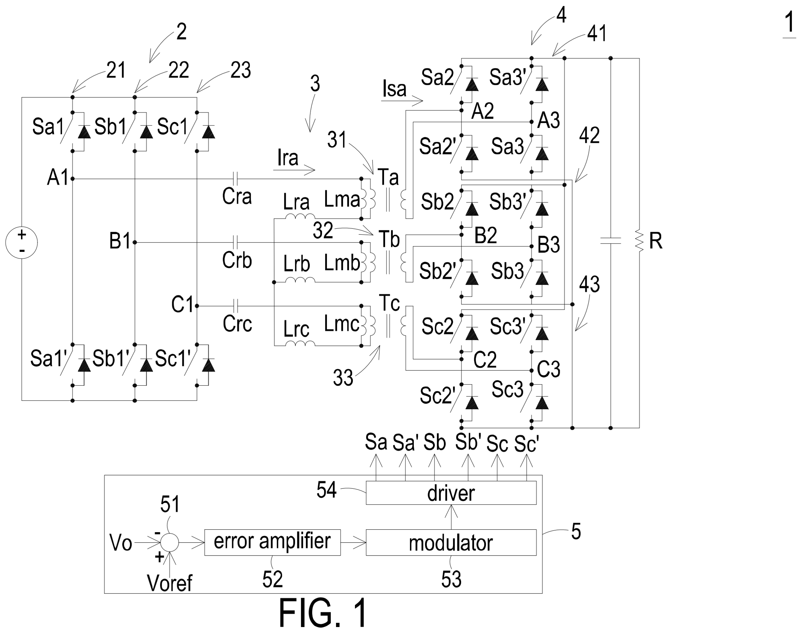

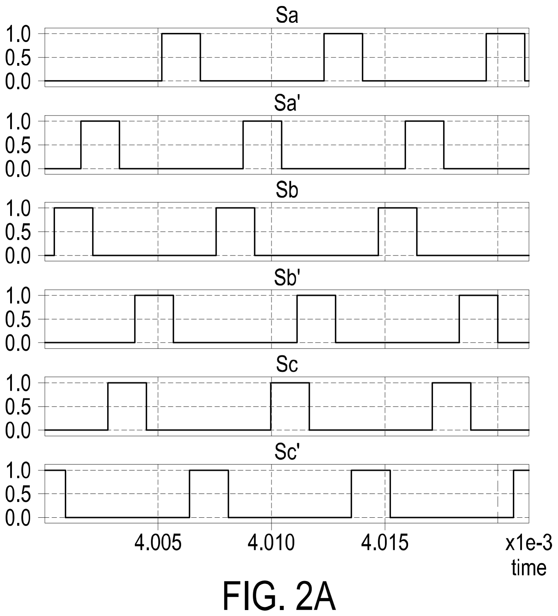

FIG. 1 is a schematic circuit diagram illustrating the circuitry topology of a resonant converter according to a first embodiment of the present disclosure. FIG. 2A is a schematic timing waveform diagram illustrating a first embodiment of control signals of the controller of the resonant converter of FIG. 1. As shown in FIG. 1, the resonant converter 1 of this embodiment includes a three-phase resonant converter including a primary circuit 2, a resonant circuit assembly 3, a secondary circuit 4, and a controller 5. The primary circuit 2 includes a first bridge arm 21, a second bridge arm 22, and a third bridge arm 23. The first bridge arm 21 includes a first primary switch Sa1 and a second primary switch Sa1'. A first middle point A1 is formed between the first primary switch Sa1 and the second primary switch Sa1'. The second bridge arm 22 includes a third primary switch Sb1 and a fourth primary switch Sb1'. A second middle point B1 is formed between the third primary switch Sb1 and the fourth primary switch Sb1'. The third bridge arm 23 includes a fifth primary switch Sc1 and a sixth primary switch Sc1'. A third middle point C1 is formed between the fifth primary switch Sc1 and the sixth primary switch Sc1'.

The resonant circuit assembly 3 includes a first resonant circuit 31, a second resonant circuit 32, and a third resonant circuit 33. The first resonant circuit 31 includes a first resonant capacitor Cra, a first resonant inductor Lra, a first magnetizing inductor Lma, and a first transformer Ta. The first transformer Ta includes a first primary winding and a first secondary winding. The first resonant capacitor Cra is connected between the first middle point A1 and a first end of the first primary winding of the first transformer Ta. The end of the first resonant capacitor Cra connected with the first middle point A1 is formed as a first input terminal of the first resonant circuit 31. The first magnetizing inductor Lma is connected with the first primary winding of the first transformer Ta in parallel. A first end of the first resonant inductor Lra is connected with a second end of the first primary winding of the first transformer Ta. The second resonant circuit 32 includes a second resonant capacitor Crb, a second resonant inductor Lrb, a second magnetizing inductor Lmb, and a second transformer Tb. The second transformer Tb includes a second primary winding and a second secondary winding. The second resonant capacitor Crb is connected between the second middle point B1 and a first end of the second primary winding of the second transformer Tb. The end of the second resonant capacitor Crb connected with the second middle point B1 is formed as a first input terminal of the second resonant circuit 32. The second magnetizing inductor Lmb is connected with the second primary winding of the second transformer Tb in parallel. A first end of the second resonant inductor Lrb is connected with a second end of the second primary winding of the second transformer Tb. The third resonant circuit 33 includes a third resonant capacitor Crc, a third resonant inductor Lrc, a third magnetizing inductor Lmc, and a third transformer Tc. The third transformer Tc includes a third primary winding and a third secondary winding. The third resonant capacitor Crc is connected between the third middle point C1 and a first end of the third primary winding of the third transformer Tc. The end of the third resonant capacitor Crc connected with the third middle point C1 is formed as a first input terminal of the third resonant circuit 33. The third magnetizing inductor Lmc is connected with the third primary winding of the third transformer Tc in parallel. A first end of the third resonant inductor Lrc is connected with a second end of the third primary winding of the third transformer Tc. A second end of the first resonant inductor Lra forming as a second input terminal of the first resonant circuit 31, a second end of the second resonant inductor Lrb forming as a second input terminal of the second resonant circuit 32 and a second end of the third resonant inductor Lrc forming as a second input terminal of the third resonant circuit 33 are connected with each other.

The secondary circuit 4 includes a first sub circuit 41, a second sub circuit 42, and a third sub circuit 43 connected with each other in parallel. The first sub circuit 41 includes two first secondary switches Sa2, Sa3 and two second secondary switches Sa2', Sa3'. The first secondary switch Sa2 and the second secondary switch Sa2' are connected with each other in sequence to form a first sub middle point A2. The first sub middle point A2 is connected with one end of the first secondary winding of the first transformer Ta. The second secondary switch Sa3' and the first secondary switch Sa3 are connected with each other in sequence to form a second sub middle point A3. The second sub middle point A3 is connected with the other end of the first secondary winding of the first transformer Ta. The second sub circuit 42 includes two third secondary switches Sb2, Sb3 and two fourth secondary switches Sb2', Sb3'. The third secondary switch Sb2 and the fourth secondary switch Sb2' are connected with each other in sequence to form a third sub middle point B2. The third sub middle point B2 is connected with one end of the second secondary winding of the second transformer Tb. The fourth secondary switch Sb3' and the third secondary switch Sb3 are connected with each other in sequence to form a fourth sub middle point B3. The fourth sub middle point B3 is connected with the other end of the second secondary winding of the second transformer Tb. The third sub circuit 43 includes two fifth secondary switches Sc2, Sc3 and two sixth secondary switches Sc2', Sc3'. The fifth secondary switch Sc2 and the sixth secondary switch Sc2' are connected with each other in sequence to form a fifth sub middle point C2. The fifth sub middle point C2 is connected with one end of the third secondary winding of the third transformer Tc. The sixth secondary switch Sc3' and the fifth secondary switch Sc3 are connected with each other in sequence to form a sixth sub middle point C3. The sixth sub middle point C3 is connected with the other end of the third secondary winding of the third transformer Tc.

In some embodiments, each of the first sub circuit 41, the second sub circuit 42, and the third sub circuit 43 may include one or more secondary switches.

The controller 5 is configured to generate a first control signal Sa, a second control signal Sa', a third control signal Sb, a fourth control signal Sb', a fifth control signal Sc, and a sixth control signal Sc'. The first primary switch Sa1 and the two first secondary switches Sa2, Sa3 are controlled by the first control signal Sa. The second primary switch Sa1' and the two second secondary switches Sa2', Sa3' are controlled by the second control signal Sa'. The third primary switch Sb1 and the two third secondary switches Sb2, Sb3 are controlled by the third control signal Sb. The fourth primary switch Sb1' and the two fourth secondary switches Sb2', Sb3' are controlled by the fourth control signal Sb'. The fifth primary switch Sc1 and the two fifth secondary switches Sc2, Sc3 are controlled by the fifth control signal Sc. The sixth primary switch Sc1' and the two sixth secondary switches Sc2', Sc3' are controlled by the sixth control signal Sc'.

In this embodiment, as shown in FIG. 2A, a duty cycle of the first control signal Sa is substantially equal to a duty cycle of the second control signal Sa'. A phase difference between the first control signal Sa and the second control signal Sa' is 180 degrees. A duty cycle of the third control signal Sb is substantially equal to a duty cycle of the fourth control signal Sb'. A phase difference between the third control signal Sb and the fourth control signal Sb' is 180 degrees. A duty cycle of the fifth control signal Sc is substantially equal to a duty cycle of the sixth control signal Sc'. A phase difference between the fifth control signal Sc and the sixth control signal Sc' is 180 degrees. A phase difference between the first control signal Sa and the third control signal Sb is 120 degrees. A phase difference between the first control signal Sa and the fifth control signal Sc is 240 degrees. A phase difference between the third control signal Sb and the fifth control signal Sc is 120 degrees. In this embodiment, the duty cycle of the first control signal Sa, the duty cycle of the second control signal Sa', the duty cycle of the third control signal Sb, the duty cycle of the fourth control signal Sb', the duty cycle of the fifth control signal Sc and the duty cycle of the sixth control signal Sc' are less than 50%, respectively.

According to the waveform of FIG. 2A, the first primary switch Sa1 and the two first secondary switches Sa2, Sa3 have substantially same duty cycle, switching frequency and deadtime. The second primary switch Sa1' and the two second secondary switches Sa2', Sa3' have substantially same duty cycle, switching frequency and deadtime. The third primary switch Sb1 and the two third secondary switches Sb2, Sb3 have substantially same duty cycle, switching frequency and deadtime. The fourth primary switch Sb1' and the two fourth secondary switches Sb2', Sb3' have substantially same duty cycle, switching frequency and deadtime. The fifth primary switch Sc1 and the two fifth secondary switches Sc2, Sc3 have substantially same duty cycle, switching frequency and deadtime. The sixth primary switch Sc1' and the two sixth secondary switches Sc2', Sc3' have substantially same duty cycle, switching frequency and deadtime.

From above, the embodiment of the present disclosure provides a resonant converter 1. The first primary switch Sa1 and the first secondary switches Sa2, Sa3 are controlled by a first control signal. The second primary switch Sa1' and the second secondary switches Sa2', Sa3' are controlled by a second control signal. The third primary switch Sb1 and the third secondary switches Sb2, Sb3 are controlled by a third control signal. The fourth primary switch Sb1' and the fourth secondary switches Sb2', Sb3' are controlled by a fourth control signal. The fifth primary switch Sc1 and the fifth secondary switches Sc2, Sc3 are controlled by a fifth control signal. The sixth primary switch Sc1' and the sixth secondary switches Sc2', Sc3' are controlled by a sixth control signal. In one embodiment, the primary switch of the primary circuit 2 and the corresponding secondary switch of the secondary circuit 4 are controlled by the substantially same control signal. In one embodiment, the primary switch of the primary circuit 2 and the corresponding secondary switch of the secondary circuit 4 are controlled by the approximately same control signal(s) within a predetermined tolerance range. Consequently, the secondary circuit 4 of the resonant converter 1 has advantage of smoothing current waveform, predicting the current waveform easily under different switching frequencies and load conditions, and controlling the other elements easily with fast load transient.

In some embodiments, the primary switches and the secondary switches may be controlled by logically related but not identical control signals.

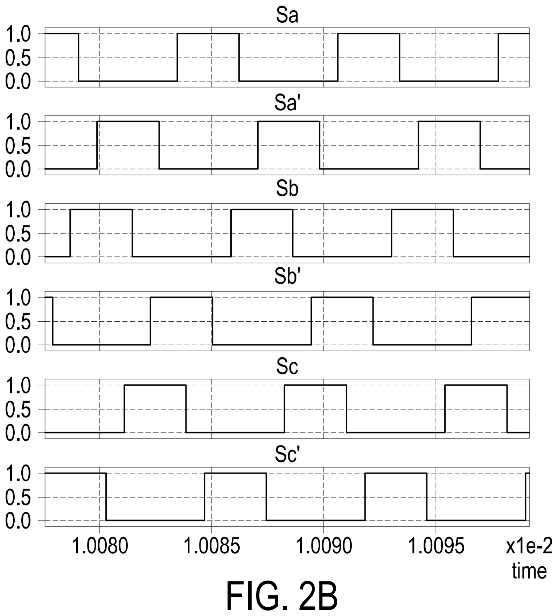

FIG. 2B is a schematic timing waveform diagram illustrating a second embodiment of control signals of the controller of the resonant converter of FIG. 1. Compared with the waveforms of FIG. 2A, as shown in FIG. 2B, in this embodiment, the duty cycle of the first control signal Sa, the duty cycle of the second control signal Sa', the duty cycle of the third control signal Sb, the duty cycle of the fourth control signal Sb', the duty cycle of the fifth control signal Sc and the duty cycle of the sixth control signal Sc' are approximately equal to 50%, respectively.

Refer to FIG. 1 again. In this embodiment, the controller 5 includes a subtractor 51, an error amplifier 52, a modulator 53 and a driver 54. The subtractor 51 is configured to receive an output voltage Vo of the resonant converter 1 and a voltage reference Voref. The subtractor 51 is configured to subtract the output voltage Vo from the voltage reference Voref to output a voltage difference. The error amplifier 52 is configured to receive and compensate the voltage difference to output a transition voltage. The modulator 53 is a voltage-frequency modulator or a voltage-duty modulator. The modulator 53 is configured to modulate the transition voltage. The driver 54 is configured to generate the first control signal Sa, the second control signal Sa', the third control signal Sb, the fourth control signal Sb', the fifth control signal Sc and the sixth control signal Sc' according to the transition voltage modulated by the modulator 53.

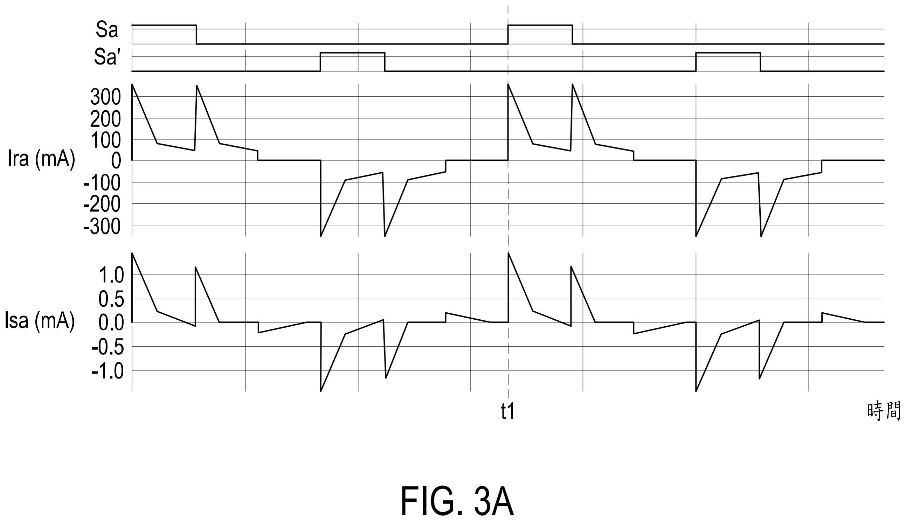

FIG. 3A is a schematic timing waveform diagram illustrating the parameter waveforms of the first control signal and the second control signal and the current of the resonant converter of FIG. 1 under the duty cycle at 17% and a light load condition. As shown in FIG. 3A, the first control signal Sa, the second control signal Sa', the current flowing through the first resonant circuit 31 (i.e., Ira), and the current flowing through the first sub circuit 41 (i.e., Isa) are shown in the figure in sequence. In this embodiment, the duty cycles of the first control signal Sa and the second control signal Sa' are 17%, and the resonant converter 1 is under a light load condition. At time t1, the first resonant circuit 31 and the first sub circuit 41 are turned on to achieve zero-current-switching. The third control signal Sb and the fourth control signal Sb' are similar to the first control signal Sa and the second control signal Sa' with 120 degrees phase difference, respectively. The fifth control signal Sc and the sixth control signal Sc' are similar to the first control signal Sa and the second control signal Sa' with 240 degrees phase difference, respectively.

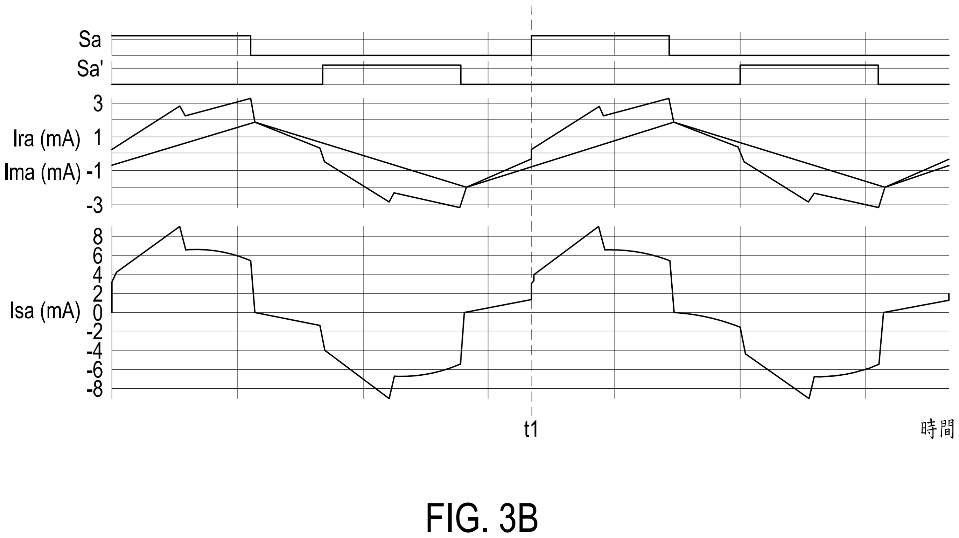

FIG. 3B is a schematic timing waveform diagram illustrating the parameter waveforms of the first control signal and the second control signal and the current of the resonant converter of FIG. 1 under the duty cycle at 33% and a light load condition. In FIG. 3B, Ima represents the current flowing through the first magnetizing inductor Lma. Similar to FIG. 3A, as shown in FIG. 3B, the duty cycles of the first control signal Sa and the second control signal Sa' are 33%, and the resonant converter 1 is under a light load condition. At time t1, the first resonant circuit 31 and the first sub circuit 41 are turned on to achieve zero-current-switching.

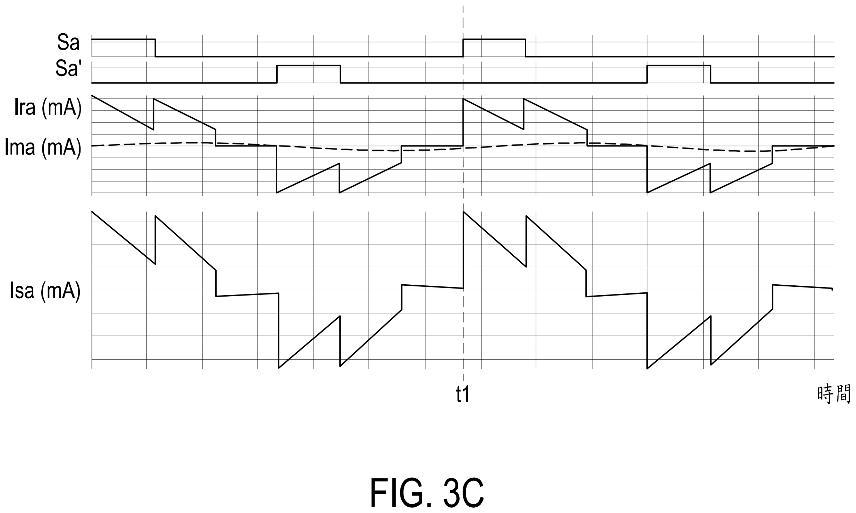

FIG. 3C is a schematic timing waveform diagram illustrating the parameter waveforms of the first control signal and the second control signal and the current of the resonant converter of FIG. 1 under the duty cycle at 17% and a heavy load condition. Similar to FIG. 3A, as shown in FIG. 3C, the duty cycles of the first control signal Sa and the second control signal Sa' are 17%, and the resonant converter 1 is under a heavy load condition. At time t1, the first resonant circuit 31 and the first sub circuit 41 are turned on to achieve zero-current-switching.

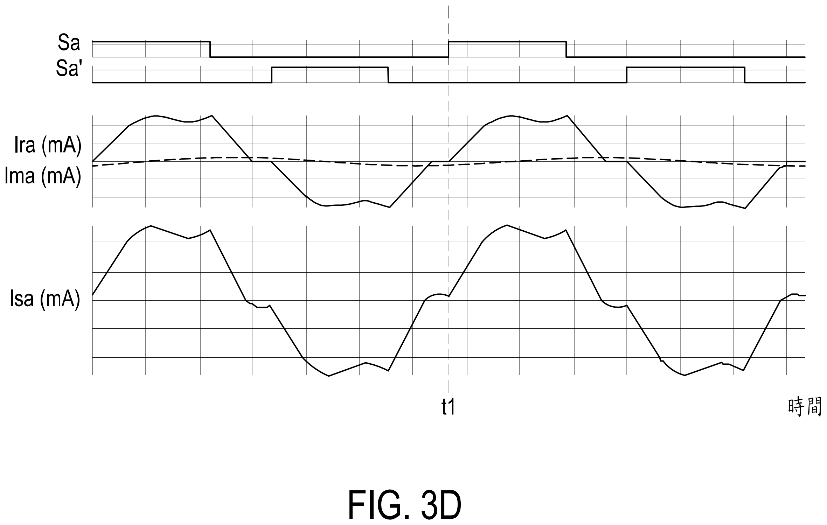

FIG. 3D is a schematic timing waveform diagram illustrating the parameter waveforms of the first control signal and the second control signal and the current of the resonant converter of FIG. 1 under the duty cycle at 33% and a heavy load condition. Similar to FIG. 3A, as shown in FIG. 3D, the duty cycles of the first control signal Sa and the second control signal Sa' are 33%, and the resonant converter 1 is under a heavy load condition. At time t1, the first resonant circuit 31 and the first sub circuit 41 are turned on to achieve zero-current-switching.

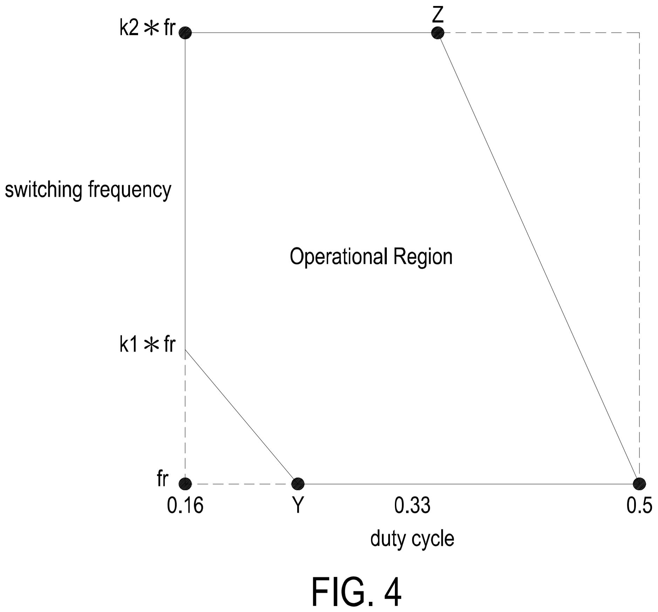

FIG. 4 shows relationship between the duty cycle and the switching frequency of the resonant converter of FIG. 1. As shown in FIG. 4, the horizontal axis is represented as the duty cycle of the control signal, and the vertical axis is represented as the switching frequency of the corresponding switch. The area indicated as the operational region shows an allowable operating region of the resonant converter of the present disclosure. The switching frequency is ranged between k1 times the resonant frequency and k2 times the resonant frequency. k1 is greater than or approximately equal to 1.1. k2 is less than or approximately equal to 5. Namely, in an embodiment, the switching frequency is ranged between 1.1 times and 5 times the resonant frequency. In an embodiment, the duty cycle of the control signal is ranged between the point Y and 0.5 when the switching frequency is substantially equal to the resonant frequency. The point Y is less than or approximately equal to 0.2. Namely, in an embodiment, the duty cycle of the control signal is ranged between 0.2 and 0.5. In an embodiment, the duty cycle of the control signal is ranged between 0.16 and the point Z when the switching frequency is substantially equal to k2 times the resonant frequency. The point Z is ranged between 0.33 and 0.4. Namely, in an embodiment, the duty cycle of the control signal is ranged between 0.16 and 0.4. At a low duty cycle (e.g., less than 0.2), the switching frequency is typically greater than the resonant frequency for reducing circulating current. In the embodiment, the switching frequency is ranged between k1 times the resonant frequency and k2 times the resonant frequency for reducing the switching loss.

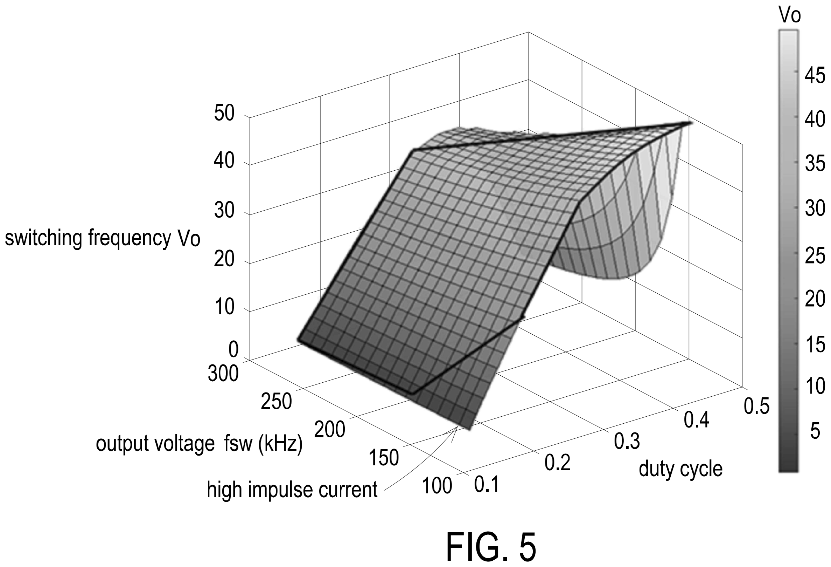

FIG. 5 shows relationship of the output voltage, the duty cycle and the switching frequency of the resonant converter of FIG. 1. As shown in FIG. 5, the Z axis is represented as the output voltage Vo of the resonant converter 1, the X axis is represented as the duty cycle of the control signal, and the Y axis is represented as the switching frequency fsw of the corresponding switch. When the switching frequency fsw is increased, the output voltage Vo is generally decreased. At a constant frequency, the duty cycle is increased from 0.1 to 0.5 initially, and the output voltage Vo is increased and eventually levels off or reaches a plateau. In the specific region indicated as the label "high impulse current", the voltage is dropped off sharply for suffering extremely high transient current spikes in the switch. For avoiding the problems, the specific area enclosed by thick black lines (i.e., the operational region of FIG. 4) represents the optimal operating range for the resonant converter 1 of the embodiment.

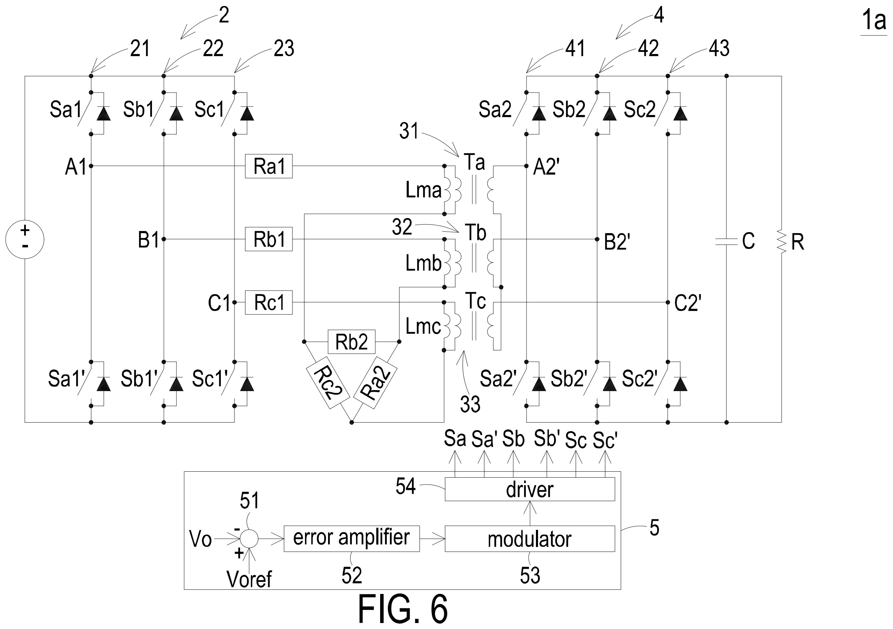

FIG. 6 is a schematic circuit diagram illustrating the circuitry topology of a resonant converter according to a second embodiment of the present disclosure. Compared the resonant converter 1a with the resonant converter 1 of FIG. 1, in this embodiment, as shown in FIG. 6, the first sub circuit 41 is a bridge arm and includes a first secondary switch Sa2 and a second secondary switch Sa2'. A first sub middle point A2' is formed between the first secondary switch Sa2 and the second secondary switch Sa2'. The second sub circuit 42 is a bridge arm and includes a third secondary switch Sb2 and a fourth secondary switch Sb2'. A second sub middle point B2' is formed between the third secondary switch Sb2 and the fourth secondary switch Sb2'. The third sub circuit 43 is a bridge arm and includes a fifth secondary switch Sc2 and a sixth secondary switch Sc2'. A third sub middle point C2' is formed between the fifth secondary switch Sc2 and the sixth secondary switch Sc2'.

The first resonant circuit 31 includes a first resonant resistor Ra1, a first transformer Ta and a first magnetizing inductor Lma. The first resonant resistor Ra1 is connected between the first middle point A1 and a first end of the first primary winding of the first transformer Ta. The end of the first resonant resistor Ra1 connected with the first middle point A1 is formed as a first input terminal of the first resonant circuit 31. A first end of the first secondary winding of the first transformer Ta forming as the first output terminal of the first resonant circuit 31 is connected with the first sub middle point A2'. The second resonant circuit 32 includes a second resonant resistor Rb1, a second transformer Tb and a second magnetizing inductor Lmb. The second resonant resistor Rb1 is connected between the second middle point B1 and a first end of the second primary winding of the second transformer Tb. The end of the first resonant resistor Rb1 connected with the second middle point B1 is formed as a first input terminal of the second resonant circuit 32. A first end of the second secondary winding of the second transformer Tb forming as the first output terminal of the second resonant circuit 32 is connected with the second sub middle point B2'. The third resonant circuit 33 includes a third resonant resistor Rc1, a third transformer Tc and a third magnetizing inductor Lmc. The third resonant resistor Rc1 is connected between the third middle point C1 and a first end of the third primary winding of the third transformer Tc. The end of the third resonant resistor Rc1 connected with the third middle point C1 is formed as a first input terminal of the third resonant circuit 33. A first end of the third secondary winding of the third transformer Tc forming as the first output terminal of the third resonant circuit 33 is connected with the third sub middle point C2'. A second end of the first secondary winding of the first transformer Ta forming as the second output terminal of the first resonant circuit 31, a second end of the second secondary winding of the second transformer Tb forming as the second output terminal of the second resonant circuit 32 and a second end of the third secondary winding of the third transformer Tc forming as the second output terminal of the third resonant circuit 33 are connected with each other.

The resonant circuit assembly 3 includes a fourth resonant resistor Ra2, a fifth resonant resistor Rb2 and a sixth resonant resistor Rc2. The fourth resonant resistor Ra2 is connected between a second end of the second primary winding of the second transformer Tb and a second end of the third primary winding of the third transformer Tc. The fifth resonant resistor Rb2 is connected between a second end of the first primary winding of the first transformer Ta and the second end of the second primary winding of the second transformer Tb. The sixth resonant resistor Rc2 is connected between the second end of the first primary winding of the first transformer Ta and the second end of the third primary winding of the third transformer Tc. Namely, a second input terminal of the first resonant circuit 31, a second input terminal of the second resonant circuit 32 and a second input terminal of the third resonant circuit 33 are connected with each other in delta connection.

From the above descriptions, the embodiment of the present disclosure provides the resonant converter. The first primary switch and the first secondary switch are controlled by a first control signal. The second primary switch and the second secondary switch are controlled by a second control signal. The third primary switch and the third secondary switch are controlled by a third control signal. The fourth primary switch and the fourth secondary switch are controlled by a fourth control signal. The fifth primary switch and the fifth secondary switch are controlled by a fifth control signal. The sixth primary switch and the sixth secondary switch are controlled by a sixth control signal. Namely, the primary switch of the primary circuit and the corresponding secondary switch of the secondary circuit are controlled by the substantially same control signal. In one embodiment, the primary switch of the primary circuit and the corresponding secondary switch of the secondary circuit are controlled by the approximately same control signal(s) within a predetermined tolerance range. Consequently, the secondary circuit of the resonant converter has advantage of smoothing current waveform, predicting the current waveform easily under different switching frequencies and load conditions, and controlling the other elements easily with fast load transient.

## Claims

1. A resonant converter (1, 1a), **characterized by** comprising:
a primary circuit (2) comprising a first bridge arm (21), a second bridge arm (22), and a third bridge arm (23), wherein the first bridge arm (21) comprises a first primary switch (Sal) and a second primary switch (Sa1'), the second bridge arm (22) comprises a third primary switch (Sb1) and a fourth primary switch (Sb1'), and the third bridge arm (23) comprises a fifth primary switch (Sc1) and a sixth primary switch (Sc1');
a secondary circuit (4) comprising a first sub circuit (41), a second sub circuit (42), and a third sub circuit (43), the first sub circuit (41) comprises at least one first secondary switch (Sa2, Sa3) and at least one second secondary switch (Sa2', Sa3'), the second sub circuit (42) comprises at least one third secondary switch (Sb2, Sb3) and at least one fourth secondary switch (Sb2', Sb3'), and the third sub circuit (43) comprises at least one fifth secondary switch (Sc2, Sc3) and at least one sixth secondary switch (Sc2', Sc3'); and
a controller (5) configured to
control the first primary switch (Sal) and the at least one first secondary switch (Sa2, Sa3) by a first control signal (Sa),
control the second primary switch (Sa1') and the at least one second secondary switch (Sa2', Sa3') by a second control signal (Sa'),
control the third primary switch (Sb1) and the at least one third secondary switch (Sb2, Sb3) by a third control signal (Sb),
control the fourth primary switch (Sb1') and the at least one fourth secondary switch (Sb2', Sb3') by a fourth control signal (Sb'),
control the fifth primary switch (Sc1) and the at least one fifth secondary switch (Sc2, Sc3) by a fifth control signal (Sc), and
control the sixth primary switch (Sc1') and the at least one sixth secondary switch (Sc2', Sc3') by a sixth control signal (Sc').

2. The resonant converter (1, 1a) according to claim 1, wherein a duty cycle of the first control signal (Sa) is equal to a duty cycle of the second control signal (Sa'), a phase difference between the first control signal (Sa) and the second control signal (Sa') is 180 degrees; a duty cycle of the third control signal (Sb) is equal to a duty cycle of the fourth control signal (Sb'), a phase difference between the third control signal (Sb) and the fourth control signal (Sb') is 180 degrees; a duty cycle of the fifth control signal (Sc) is equal to a duty cycle of the sixth control signal (Sc'), a phase difference between the fifth control signal (Sc) and the sixth control signal (Sc') is 180 degrees.

3. The resonant converter (1, 1a) according to claim 2, wherein the duty cycle of the first control signal (Sa), the duty cycle of the second control signal (Sa'), the duty cycle of the third control signal (Sb), the duty cycle of the fourth control signal (Sb'), the duty cycle of the fifth control signal (Sc), and the duty cycle of the sixth control signal (Sc') are 50%, respectively.

4. The resonant converter (1, 1a) according to claim 2, wherein the duty cycle of the first control signal (Sa), the duty cycle of the second control signal (Sa'), the duty cycle of the third control signal (Sb), the duty cycle of the fourth control signal (Sb'), the duty cycle of the fifth control signal (Sc), and the duty cycle of the sixth control signal (Sc') are less than 50%, respectively.

5. The resonant converter (1, 1a) according to claim 1, wherein a phase difference between the first control signal (Sa) and the third control signal (Sb) is 120 degrees; a phase difference between the first control signal (Sa) and the fifth control signal (Sc) is 240 degrees.

6. The resonant converter (1, 1a) according to claim 1, wherein
the first primary switch (Sa1) and the at least one first secondary switch (Sa2, Sa3) have same duty cycle, switching frequency, and deadtime;
the second primary switch (Sa1') and the at least one second secondary switch (Sa2', Sa3') have same duty cycle, switching frequency, and deadtime;
the third primary switch (Sb1) and the at least one third secondary switch (Sb2, Sb3) have same duty cycle, switching frequency, and deadtime;
the fourth primary switch (Sb1') and the at least one fourth secondary switch (Sb2', Sb3') have same duty cycle, switching frequency, and deadtime;
the fifth primary switch (Sc1) and the at least one fifth secondary switch (Sc2, Sc3) have same duty cycle, switching frequency, and deadtime; and
the sixth primary switch (Sc1') and the at least one sixth secondary switch (Sc2', Sc3') have same duty cycle, switching frequency, and deadtime.

7. The resonant converter (1, 1a) according to claim 1, wherein a duty cycle of the first control signal (Sa), a duty cycle of the second control signal (Sa'), a duty cycle of the third control signal (Sb), a duty cycle of the fourth control signal (Sb'), a duty cycle of the fifth control signal (Sc), and/or a duty cycle of the sixth control signal (Sc') are ranged between 0.2 and 0.5, or ranged between 0.16 and 0.4.

8. The resonant converter (1, 1a) according to claim 1, wherein a switching frequency of the first primary switch (Sa1), a switching frequency of the second primary switch (Sa1'), a switching frequency of the third primary switch (Sb1), a switching frequency of the fourth primary switch (Sb1'), a switching frequency of the fifth primary switch (Sc1), a switching frequency of the sixth primary switch (Sc1'), a switching frequency of the at least one first secondary switch (Sa2, Sa3), a switching frequency of the at least one second secondary switch (Sa2', Sa3'), a switching frequency of the at least one third secondary switch (Sb2, Sb3), a switching frequency of the at least one fourth secondary switch (Sb2', Sb3'), a switching frequency of the at least one fifth secondary switch (Sc2, Sc3), and a switching frequency of the at least one sixth secondary switch (Sc2', Sc3') are ranged between 1.1 times and 5 times a resonant frequency of the resonant converter (1, 1a) respectively.

9. The resonant converter (1, 1a) according to any one of above claims, wherein the resonant converter (1, 1a) comprises a resonant circuit assembly (3), the resonant circuit assembly (3) comprises a first resonant circuit (31), a second resonant circuit (32), and a third resonant circuit (33), the first resonant circuit (31) is connected between the first bridge arm (21) and the first sub circuit (41), the second resonant circuit (32) is connected between the second bridge arm (22) and the second sub circuit (42), and the third resonant circuit (33) is connected between the third bridge arm (23) and the third sub circuit (43).

10. The resonant converter (1) according to claim 9, wherein a first middle point (A1) is formed between the first primary switch (Sa1) and the second primary switch (Sa1'), a second middle point (B1) is formed between the third primary switch (Sb1) and the fourth primary switch (Sb1'), a third middle point (C1) is formed between the fifth primary switch (Sc1) and the sixth primary switch (Sc1'), wherein the first sub circuit (41) comprises two first secondary switches (Sa2, Sa3) and two second secondary switches (Sa2', Sa3'), one of the two first secondary switches (Sa2, Sa3) is connected with one of the two second secondary switches (Sa2', Sa3') to form a first sub middle point (A2), the other of the two second secondary switches (Sa2', Sa3') is connected with the other of the two first secondary switches (Sa2, Sa3) to form a second sub middle point (A3), the second sub circuit (42) comprises two third secondary switches (Sb2, Sb3) and two fourth secondary switches (Sb2', Sb3'), one of the two third secondary switches (Sb2, Sb3) is connected with one of the two fourth secondary switches (Sb2', Sb3') to form a third sub middle point (B2), the other of the two fourth secondary switches (Sb2', Sb3') is connected with the other of the two third secondary switches (Sb2, Sb3) to form a fourth sub middle point (B3), the third sub circuit (43) comprises two fifth secondary switches (Sc2, Sc3) and two sixth secondary switches (Sc2', Sc3'), one of the two fifth secondary switches (Sc2, Sc3) is connected with one of the two sixth secondary switches (Sc2', Sc3') to form a fifth sub middle point (C2), the other of the two sixth secondary switches (Sc2', Sc3') is connected with the other of the two fifth secondary switches (Sc2, Sc3) to form a sixth sub middle point (C3).

11. The resonant converter (1) according to claim 10, wherein a first input terminal of the first resonant circuit (31) is connected with the first middle point (A1), a first output terminal of the first resonant circuit (31) is connected with the first sub middle point (A2), a second output terminal of the first resonant circuit (31) is connected with the second sub middle point (A3), a first input terminal of the second resonant circuit (32) is connected with the second middle point (B1), a first output terminal of the second resonant circuit (32) is connected with the third sub middle point (B2), a second output terminal of the second resonant circuit (32) is connected with the fourth sub middle point (B3), a first input terminal of the third resonant circuit (33) is connected with the third middle point (C1), a first output terminal of the third resonant circuit (33) is connected with the fifth sub middle point (C2), a second output terminal of the third resonant circuit (33) is connected with the sixth sub middle point (C3), and a second input terminal of the first resonant circuit (31), a second input terminal of the second resonant circuit (32) and a second input terminal of the third resonant circuit (33) are connected with each other.

12. The resonant converter (1) according to claim 10, wherein the first resonant circuit (31) comprises a first resonant capacitor (Cra), a first resonant inductor (Lra), a first magnetizing inductor (Lma), and a first transformer (Ta), the first transformer (Ta) comprises a first primary winding and a first secondary winding, the first resonant capacitor (Cra) is connected between the first middle point (A1) and a first end of the first primary winding, the first magnetizing inductor (Lma) is connected with the first primary winding in parallel, a first end of the first resonant inductor (Lra) is connected with a second end of the first primary winding, two ends of the first secondary winding are connected with the first sub middle point (A2) and the second sub middle point (A3), respectively;
the second resonant circuit (32) comprises a second resonant capacitor (Crb), a second resonant inductor (Lrb), a second magnetizing inductor (Lmb), and a second transformer (Tb), the second transformer (Tb) comprises a second primary winding and a second secondary winding, the second resonant capacitor (Crb) is connected between the second middle point (B1) and a first end of the second primary winding, the second magnetizing inductor (Lmb) is connected with the second primary winding in parallel, a first end of the second resonant inductor (Lrb) is connected with a second end of the second primary winding, two ends of the second secondary winding are connected with the third sub middle point (B2) and the fourth sub middle point (B3), respectively;
the third resonant circuit (33) comprises a third resonant capacitor (Crc), a third resonant inductor (Lrc), a third magnetizing inductor (Lmc), and a third transformer (Tc), the third transformer (Tc) comprises a third primary winding and a third secondary winding, the third resonant capacitor (Crc) is connected between the third middle point (C1) and a first end of the third primary winding, the third magnetizing inductor (Lmc) is connected with the third primary winding in parallel, a first end of the third resonant inductor (Lrc) is connected with a second end of the third primary winding, two ends of the third secondary winding are connected with the fifth sub middle point (C2) and the sixth sub middle point (C3), respectively, and a second end of the first resonant inductor (Lra), a second end of the second resonant inductor (Lrb), and a second end of the third resonant inductor (Lrc) are connected with each other.

13. The resonant converter (1a) according to claim 9, wherein a first middle point (A1) is formed between the first primary switch (Sa1) and the second primary switch (Sa1'), a second middle point (B1) is formed between the third primary switch (Sb1) and the fourth primary switch (Sb1'), a third middle point (C1) is formed between the fifth primary switch (Sc1) and the sixth primary switch (Sc1'), the first sub circuit (41) is a bridge arm and comprises a first secondary switch (Sa2) and a second secondary switch (Sa2'), a first sub middle point (A2') is formed between the first secondary switch (Sa2) and the second secondary switch (Sa2'), the second sub circuit (42) is a bridge arm and comprises a third secondary switch (Sb2) and a fourth secondary switch (Sb2'), a second sub middle point (B2') is formed between the third secondary switch (Sb2) and the fourth secondary switch (Sb2'), the third sub circuit (43) is a bridge arm and comprises a fifth secondary switch (Sc2) and a sixth secondary switch (Sc2'), and a third sub middle point (C2') is formed between the fifth secondary switch (Sc2) and the sixth secondary switch (Sc2').

14. The resonant converter (1a) according to claim 13, wherein a first input terminal of the first resonant circuit (31) is connected with the first middle point (A1), a first output terminal of the first resonant circuit (31) is connected with the first sub middle point (A2'), a first input terminal of the second resonant circuit (32) is connected with the second middle point (B1), a first output terminal of the second resonant circuit (32) is connected with the second sub middle point (B2'), a first input terminal of the third resonant circuit (33) is connected with the third middle point (C1), a first output terminal of the third resonant circuit (33) is connected with the third sub middle point (C2'), a second input terminal of the first resonant circuit (31), a second input terminal of the second resonant circuit (32) and a second input terminal of the third resonant circuit (33) are connected with each other in delta connection, and a second output terminal of the first resonant circuit (31), a second output terminal of the second resonant circuit (32) and a second output terminal of the third resonant circuit (33) are connected with each other.

15. The resonant converter (1a) according to claim 13, wherein the first resonant circuit (31) comprises a first resonant resistor (Ra1), a first transformer (Ta) and a first magnetizing inductor (Lma), the first transformer (Ta) comprises a first primary winding and a first secondary winding, the first resonant resistor (Ra1) is connected between the first middle point (A1) and a first end of the first primary winding, the first magnetizing inductor (Lma) is connected with the first primary winding in parallel, a first end of the first secondary winding is connected with the first sub middle point (A2'); the second resonant circuit (32) comprises a second resonant resistor (Rb1), a second transformer (Tb) and a second magnetizing inductor (Lmb), the second transformer (Tb) comprises a second primary winding and a second secondary winding, the second resonant resistor (Rb1) is connected between the second middle point (B1) and a first end of the second primary winding, the second magnetizing inductor (Lmb) is connected with the second primary winding in parallel, a first end of the second secondary winding is connected with the second sub middle point (B2');
the third resonant circuit (33) comprises a third resonant resistor (Rc1), a third transformer (Tc) and a third magnetizing inductor (Lmc), the third transformer (Tc) comprises a third primary winding and a third secondary winding, the third resonant resistor (Rc1) is connected between the third middle point (C1) and a first end of the third primary winding, the third magnetizing inductor (Lmc) is connected with the third primary winding in parallel, a first end of the third secondary winding is connected with the third sub middle point (C2');
a second end of the first secondary winding, a second end of the second secondary winding, and a second end of the third secondary winding are connected with each other, the resonant circuit assembly (3) further comprises a fourth resonant resistor (Ra2), a fifth resonant resistor (Rb2), and a sixth resonant resistor (Rc2), the fourth resonant resistor (Ra2) is connected between a second end of the second primary winding and a second end of the third primary winding, the fifth resonant resistor (Rb2) is connected between a second end of the first primary winding and the second end of the third primary winding, and the sixth resonant resistor (Rc2) is connected between the second end of the first primary winding and the second end of the second primary winding.

16. The resonant converter (1, 1a) according to any one of above claims, wherein the first sub circuit (41), the second sub circuit (42), and the third sub circuit (43) are connected with each other in parallel.

17. The resonant converter (1, 1a) according to any one of above claims, wherein the controller (5) comprises:
a subtractor (51) configured to receive an output voltage (Vo) of the resonant converter (1, 1a) and a voltage reference (Voref), and configured to subtract the output voltage (Vo) from the voltage reference (Voref) to output a voltage difference;
an error amplifier (52) configured to receive and compensate the voltage difference to output a transition voltage;
a modulator (53) configured to modulate the transition voltage; and
a driver (54) configured to generate the first control signal (Sa), the second control signal (Sa'), the third control signal (Sb), the fourth control signal (Sb'), the fifth control signal (Sc), and the sixth control signal (Sc') according to the transition voltage modulated by the modulator (53).
